**Europäisches Patentamt**

**European Patent Office**

**Office européen des brevets**

(19)

(11) Veröffentlichungsnummer: **0 107 154 B1**

(12) **EUROPÄISCHE PATENTSCHRIFT**

(45) Veröffentlichungstag der Patentschrift: 01.04.87

(21) Anmeldenummer: **83110229.8**

(22) Anmeldetag: **13.10.83**

(51) Int. Cl.⁴: **F 27 D 13/00, C 21 C 5/56**

(54) Chargiergut-Vorwärmer.

(30) Priorität: **13.10.82 DE 3238017**

(43) Veröffentlichungstag der Anmeldung: **02.05.84 Patentblatt 84/18**

(45) Bekanntmachung des Hinweises auf die Patenterteilung: **01.04.87 Patentblatt 87/14**

(84) Benannte Vertragsstaaten: **FR GB IT SE**

(56) Entgegenhaltungen:
**DE - A - 3 038 515
FR - A - 2 489 494
US - A - 3 802 830
US - A - 4 262 825**

(73) Patentinhaber: **Fuchs Systemtechnik GmbH, Reithallenstrasse 1, D-7601 Willstätt-Legelshurst (DE)**

(72) Erfinder: **Minarik, Ferdinand, Dipl.-Ing., Kirchgasse 6, 8757 Karlstein 1 (DE)**
Erfinder: **Paletzki, Hans-Joachim, Dipl.-Ing., Brühlstrasse 6, 6730 Neustadt 21 (DE)**

(74) Vertreter: **Blumbach Weser Bergen Kramer Zwirner Hoffmann Patentanwälte, Radeckestrasse 43, D-8000 München 60 (DE)**

## Beschreibung

Die Erfindung betrifft einen Chargiergut-Vorwärmer gemäss dem Gattungsbegriff des Patentanspruches 1.

Ein Chargiergut-Vorwärmer dient dazu Chargiergut wie Schrott, Erz, Eisenschwamm, Legierungsmittel, Schlackenbildner etc. vorzuwärmenden, bevor es in einen Schmelzofen oder in ein Frischgefäss oder in einen Brennofen chargiert wird. Vorzugsweise dient der Chargiergut-Vorwärmer zum Vorwärmen von Metallschrott oder Eisenschwamm, bevor diese Materialien in einen Schmelzofen, vorzugsweise einen Lichtbogenofen, chargiert werden. Zum Vorwärmen des Chargierguts werden zum Beispiel die heissen Abgase des Schmelzofens durch den Chargiergut-Vorwärmer hindurchgeleitet.

Der Chargiergut-Vorwärmer ist vorzugsweise als Schrottkorb mit einem wenigstens zwei ausschwenkbare Schalenteile enthaltenden Boden ausgebildet, wobei im unteren Bereich Gasdurchtrittsöffnungen für die Heizgase vorhanden sein müssen. Bei dem durch die DE-A1 3 038 515 bekannt gewordenen Chargiergut-Vorwärmer ist im geschlossenen Zustand des Behälterbodens zwischen den ausschwenkbaren Schalenteilen des Bodens und der Aussenseite des Behälters ein Ringspalt vorgesehen, durch den die Heizgase hindurchtreten können. Der Behälter wird mit seinem unteren Teil nach dem Füllen mit kaltem Chargiergut in eine Kammer gesetzt, die oberhalb des Ringspalts zwischen Behälterboden und Behälterwand mittels zweier Deckelhälften mit halbkreisförmigen Ausschnitten dicht abgeschlossen wird. Die obere Öffnung des Behälters wird dicht mittels einer Haube verschlossen. Die Haube steht mit dem Abgasrohr einer Heissgasquelle in Verbindung, die Kammer, gegebenenfalls über einen Ventilator, mit einem Filterhaus oder einem Abgaskamin. Damit wird das heisse Abgas von oben durch den Chargiergut-Vorwärmer nach unten geleitet, erwärmt hierbei das Chargiergut und wird über die dicht abgeschlossene Kammer abgezogen. Es wäre auch möglich, die Heizgase über die Kammer zuzuführen und die abgekühlten Gase aus der auf den Chargiergut-Vorwärmer aufgesetzten Haube abzuziehen.

Nach dem Aufheizen des Chargiergutes wird die Haube zur Seite bewegt, der Chargiergut-Vorwärmer kann dann der Kammer entnommen und über dem Schmelzofen durch Ausschwenken der Schalenteile des Bodens entleert werden.

Um beim bekannten Chargiergut-Vorwärmer eine gleichmässige Erhitzung des Chargiergutes zu erzielen, sind über den Umfang verteilt an der Behälterinnenwand senkrechte Kanäle mit abwärtsgerichteten Gasdurchlässen vorgesehen und es wird der Behälter unter Verwendung eines Ankers beschickt, durch den im zentralen Bereich der Beschickung ein Kanal ausgebildet wird.

Bei dem durch die US-A 4 262 825 bekannt gewordenen Chargiergut-Vorwärmer gemäss dem Gattungsbegriff des Patentanspruchs 1 wird eine gleichmässige Durchströmung des aufzuheizenden Chargiergutes dadurch erzielt, dass die ausschwenkbaren Schalenteile des Bodens eine Vielzahl von jalousieartig angeordneten Lamellen enthalten. Die Lamellen sind im wesentlichen parallel zur Schwenkachse der Schalenteile in Form von Stufen angeordnet, wobei sich ihre Ränder unter Bildung von spaltförmigen Durchtrittsöffnungen für die Heizgase überlappen. Die mittleren Lamellen liegen im geschlossenen Zustand der Schalenteile am tiefsten und verlaufen diametral zur Bodenöffnung des Behälters. Um zu verhindern, dass sich in den zueinander parallelen Längsspalten zwischen den Lamellen Schrott-Teile festsetzen sind die Lamellen schwenkbar gelagert, wobei die Schwenkachsen im wesentlichen parallel zur Schwenkachse der Halbschalen verlaufen.

Der Erfindung liegt die Aufgabe zugrunde, bei einem Chargiergut-Vorwärmer der einleitend genannten Art eine gleichmässige Durchströmung des aufzuheizenden Chargiergutes mit Heizgasen zu erzielen, ohne dass zusätzliche Verfahrensmassnahmen beim Beschicken des Behälters erforderlich sind.

Die Aufgabe wird durch die Merkmale des Anspruches 1 gelöst. Vorteilhafte Ausgestaltungen der Erfindung sind den übrigen Ansprüchen zu entnehmen.

Bei der erfindungsgemässen Lösung ist im geschlossenen Zustand des Behälterbodens in diesem wenigstens ein Ringspalt für den Durchtritt des Heizgases vorgesehen, der so ausgebildet ist, dass sich in ihm keine Teilchen des aufzuheizenden Chargiergutes festklemmen können. Anstelle eines durchgehenden Ringspaltes können auch Ringspaltabschnitte vorgesehen werden. Durch einen oder mehrere Ringspalte oder durch Ringspaltabschnitte im Behälterboden lässt sich der Strömungsweg der Heizgase durch den Behälter so ausbilden, dass eine gleichmässige Durchströmung des Chargiergutes in senkrechter Richtung erzielt wird. Selbstverständlich muss in diesem Fall dafür gesorgt werden, dass an der Obergrenze der Beschickung, unterhalb der auf den Behälter aufzusetzenden Haube, ein sich über den gesamten Innenquerschnitt des Behälters erstreckender Freiraum vorhanden ist, damit hier das Heizgas über den gesamten Querschnitt gleichmässig eintreten oder, falls es von unten zugeführt wird, austreten kann.

Es ist im Prinzip möglich, dass wie beim bekannten Chargiergut-Vorwärmer auch zwischen dem Aussenrand der den Behälterboden bildenden Schalen und der Behälterwand ein Ringspalt vorgesehen wird. Gemäss einer vorteilhaften Weiterbildung der Erfindung schliesst jedoch der Aussenrand des Behälterbodens im geschlossenen Zustand der ausschwenkbaren Schalenteile dicht an die Behälterwand an und es ist am äussersten Ringteil eine Schulter zur Auflage auf dem Rand der Kammer vorgesehen. Auf diese Weise kann gleichzeitig das Abdichtproblem zwischen Chargiergut-Vorwärmer und Kammer besonders vorteilhaft gelöst werden, ohne dass es erforderlich ist, nach Einsetzen des Behälters in die Kammer Deckelhälften mit halbkreisförmigen Ausschnitten an die Behälterwand heranzufahren, oder andere Massnahmen zur Abdichtung vorzusehen, die wesentliche konstruktive Änderungen gegenüber bekannten Schrottkörben erforderlich machen würden. Die erfindungsgemässe Lösung erlaubt auf einfache Weise ein einfaches Umrüsten bereits vorhandener Schrottkörbe – es ist lediglich der Boden anders auszubilden –, ohne dass das Korbgefäss und die an ihm installierten Bauelemente grundsätzlich geändert werden müssen und ohne dass aus Gründen der Abdichtung die Aussenabmessungen des Schrottkorbs wesentlich vergrössert werden müssen. Die Kammer kann bei der erfindungsgemässen Lösung kleiner ausgebildet werden.

Die Erfindung wird durch ein Ausführungsbeispiel anhand einer Figur näher erläutert.

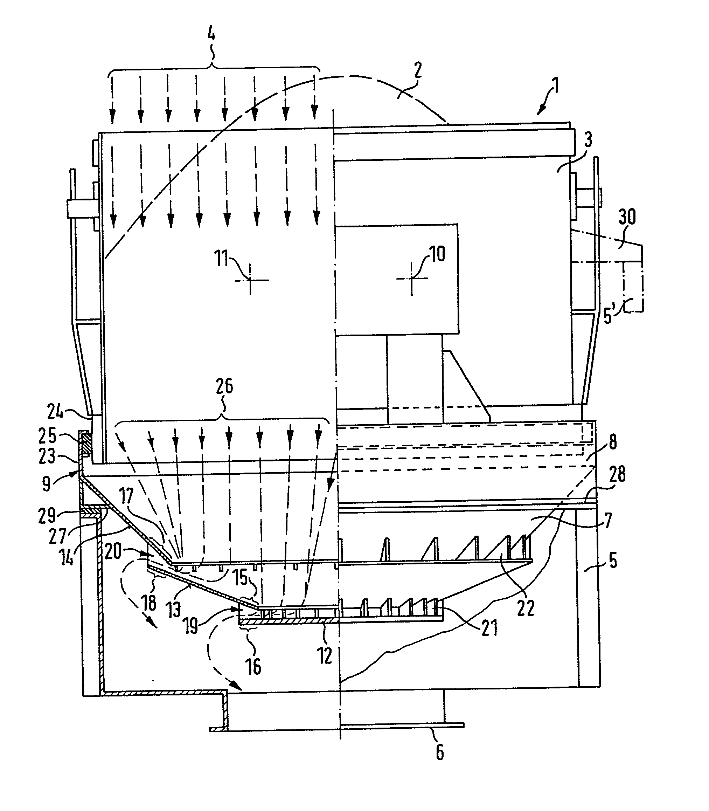

Die Figur zeigt halbseitig geschnitten in einer Seitenansicht einen Chargiergut-Vorwärmer gemäss der Erfindung.

Der in der Figur dargestellte Chargiergut-Vorwärmer 1 zur Aufnahme des mittels eines Heizgases aufzuwärmenden Chargiergutes 2 kann beispielsweise in einer Anlage eingesetzt werden, wie sie in der DE-OS 3 038 515 beschrieben ist. Der Chargiergut-Vorwärmer ist in Form eines oben offenen Behälters 3 ausgebildet, auf den eine mit der Heizgasquelle in Verbindung stehende Haube (nicht dargestellt) dicht so aufgesetzt werden kann, dass innerhalb des Behälters, oberhalb der Schüttung und unterhalb der Haube ein Freiraum gebildet wird, so dass von oben durch die Haube einströmendes Heizgas etwa gleichmässig verteilt über den Querschnitt der Schüttung in diese eintritt. Die Strömung der Heizgase ist durch die Pfeile 4 in der Schnittdarstellung der Figur angedeutet. Der untere Teil des Behälters 3 befindet sich in einer Kammer 5, die einen Gasauslass 6 aufweist. Dieser steht durch Rohrleitungen über ein Sauggebläse mit einem Kamin oder dergleichen in Verbindung.

Der Behälter 3 ist unten durch einen Boden 7 abgeschlossen, der aus zwei ausschwenkbaren Schalenteilen 8 und 9 besteht. Die Schwenkachse für das rechte Schalenteil 8 ist mit 10 bezeichnet, die Schwenkachse für das linke Schalenteil 9 mit 11. Das Ausschwenken der Schalenteile erfolgt in bekannter Weise, beispielsweise mittels Ketten, die wie bei einem üblichen Schrottkorb an den Rändern der Schalenteile angreifen.

Im geschlossenen Zustand des Behälterbodens, d.h. in dem in der Figur dargestellten Zustand weist der Behälterboden einen zentralen Teil 12 und zwei Ringteile, nämlich einen innenliegenden Ringteil 13 und einen aussenliegenden Ringteil 14 auf. Die Innenrandzone 15 des innenliegenden Ringteils 13 überlappt die Randzone 16 des zentralen Teils 12. Ausserdem überlappt die Innenrandzone 17 des aussenliegenden Ringteils 14 die Aussenrandzone 18 des innenliegenden Ringteils 13. Die sich jeweils überlappenden Zonen sind unter Bildung je eines Ringspaltes 19 bzw. 20 mit Abstand voneinander angeordnet. Zur Gewährleistung des Abstandes sind zwischen den sich überlappenden Randzonen radial ausgerichtete Stege 21 bzw. 22 vorgesehen. Es soll bemerkt werden, dass im vorliegenden Fall der Chargiergut-Vorwärmer wie ein üblicher Schrottkorb einen runden Querschnitt aufweist, obwohl dies keine zwingende Voraussetzung ist. Bei anderen Querschnittsformen kann es zweckmässig sein, die Stege aus strömungstechnischen Gründen anders auszurichten und auch über den Umfang ungleichmässig zu verteilen.

Bei dem dargestellten Chargiergut-Vorwärmer ist der Aussenrand des äussersten Ringteils 14 nach oben gezogen und zwischen der hochgezogenen Randzone 23 und der Aussenseite 24 des Behälters 3 eine Dichtung 25 vorgesehen. Die Dichtung ist an der hochgezogenen Randzone 23 befestigt, so dass sie beim Chargieren des Ofens geringeren thermischen Beanspruchungen ausgesetzt ist, als wenn sie an der Behälteraussenwand befestigt wäre.

Aufgrund der Abdichtung an der genannten Stelle werden die von oben in die Schüttung eintretenden Heizgase (siehe Pfeile 4) gezwungen, die Schüttung unten über die Ringspalte 19 oder 20 zu verlassen. Hierdurch wird eine im wesentlichen gleichmässige Strömungsverteilung über den Querschnitt erzielt. Die Strömungsverhältnisse im unteren Bereich des Behälters sind in der linken Hälfte der Figur durch Pfeile 26 angedeutet. Da somit die Heizgase den Chargiergut-Vorwärmer nur im Bodenbereich verlassen, ist es gemäss einer Weiterbildung der Erfindung möglich, am äussersten Ringteil 14 eine Schulter 27 zur Auflage auf dem Rand 28 der Kammer 5 vorzusehen. Hierdurch entfällt die Notwendigkeit einer Abdichtung der Kammer 5 durch besondere Deckel. Nach dem Aufsetzen des Chargiergut-Vorwärmers 1 auf die Kammer 5 ist diese dicht abgeschlossen. Erforderlichenfalls kann zwischen der Schulter 27 und dem Rand 28 eine Dichtung 29 vorgesehen werden.

Der Chargiergut-Vorwärmer kann aber auch neben den im Boden 7 vorgesehenen Gasdurchtrittsöffnungen einen Ringspalt zwischen dem Rand des Bodens und der Aussenseite 24 des Behälters 3 aufweisen. Bei dem in der Figur dargestellten Chargiergut-Vorwärmer würde dann die Dichtung 25 entfallen und ein Teil der nach unten strömenden Heizgase über den Ringspalt zwischen der hochgezogenen Randzone 23 und der Aussenseite 24 des Behälters 3 austreten. Um auch diesen Anteil in den Heizgaskreislauf einzubeziehen, muss die Kammer 5 vergrössert und oberhalb des genannten Ringspaltes abgedichtet werden.

Die Abdichtung kann, wie auf der rechten Seite der Figur strichpunktiert dargestellt, beispielsweise dadurch erfolgen, dass am Behälter ein Ringflansch 30 vorgesehen wird, der auf den Rand der vergrösserten Kammer 5′ aufgesetzt wird. Es ist auch eine Abdichtung im Bereich der Haube des Chargiergut-Vorwärmers denkbar.

Bei dem in der Figur dargestellten Ausführungsbeispiel sind die Ringteile 13 und 14 kegelstumpfförmig ausgebildet. Dies ist eine aus Gründen der Herstellung besonders günstige Lösung. Selbstverständlich sind auch andere Formen, beispielsweise Kugelabschnitte, bei der Ausgestaltung des Behälterbodens 7 möglich. Ausserdem brauchen die Ringspalte 16 bzw. 20 sich nicht über den gesamten Umfang zu erstrekken. Es genügt, wenn sie sich über Teile des Umfangs erstrecken. Sie können auch gegeneinander versetzt sein. Wichtig ist hierbei jedoch stets, dass die Gasaustrittsöffnungen so ausgebildet werden, dass sich das Schüttgut in ihnen nicht festsetzen kann.

## Patentansprüche

1. Chargiergut-Vorwärmer in Form eines Behälters zur Aufnahme eines mittels eines Heizgases aufzuwärmenden Chargiergutes, insbesondere von Metallschrott, mit einem Boden aus wenigstens zwei ausschwenkbaren Schaltenteilen, die jeweils durch Elemente gebildet werden, deren Ränder sich mit Abstand unter Bildung einer spaltförmigen Durchtrittsöffnung für die Heizgase überlappen, gekennzeichnet durch die folgenden Merkmale im geschlossenen Zustand des Behälterbodens:
a) der Behälterboden (7) ist aus einem zentralen Teil (12) und wenigstens einem Ringteil (13, 14) gebildet,
b) die Innenrandzone (15) des Ringteils (13) überlappt die Randzone (16) des zentralen Teils (12),
c) die Randzone (16) des zentralen Teils (12) liegt unter Bildung eines Ringspaltes (19) mit Abstand unterhalb der Innenrandzone (15) des Ringteils (13),
d) zwischen den sich überlappenden Randzonen (15/16) sind Stege (21) vorhanden.
2. Chargiergut-Vorwärmer nach Anspruch 1, dadurch gekennzeichnet, dass bei benachbarten Ringteilen (13, 14) jeweils die Innenrandzone (17) des aussenliegenden Ringteils (14) die Aussenrandzone (18) des innenliegenden Ringteils (13) überlappt und unter Bildung eines Ringspaltes (20) mit Abstand oberhalb der Aussenrandzone (18) des innenliegenden Ringteils (13) liegt und zwischen den sich überlappenden Randzonen (17/18) Stege (22) vorhanden sind.
3. Chargiergut-Vorwärmer nach Anspruch 1 oder 2, dadurch gekennzeichnet, dass die Stege (21, 22) radial ausgerichtet sind.
4. Chargiergut-Vorwärmer nach einem der Ansprüche 1 bis 3, dadurch gekennzeichnet, dass die Ringteile (13, 14) jeweils in mehrere Ringstükke unterteilt sind.
5. Chargiergut-Vorwärmer nach einem der Ansprüche 1 bis 4, dadurch gekennzeichnet, dass der Aussenrand (23) des äussersten Ringteils dicht an die Behälterwand anschliesst und am äussersten Ringteil (14) eine Schulter (27) zur Auflage auf dem Rand einer Kammer (5) vorhanden ist.

6. Chargiergut-Vorwärmer nach einem der Ansprüche 1 bis 5, dadurch gekennzeichnet, dass der Aussenrand (23) des äussersten Ringteils (14) nach oben gezogen ist und zwischen der hochgezogenen Randzone und der Aussenseite (24) des Behälters (3) eine Dichtung (25) vorgesehen ist.
7. Chargiergut-Vorwärmer nach Anspruch 5 oder 6, dadurch gekennzeichnet, dass an der Schulter (27) zur Auflage auf dem Rand einer Kammer (5) eine Dichtung (29) vorgesehen ist.

## Revendications

1. Préchauffeur de matières à charger sous forme d'une cuve de réception d'un produit à charger, notamment de ferraille métallique à réchauffeur au moyen d'un gaz chaud, comprenant un fond constitué d'au moins deux parties basculantes, en forme de coquille qui sont formées par des éléments dont les bords se recouvrent, tout en étant à distance en formant une ouverture de passage en forme de fente pour les gaz chauds, caractérisé par les particularités suivantes, lorsque le fond du récipient est à l'état fermé:
a) le fond de la cuve (7) est formé d'une partie centrale (12) et d'au moins une partie annulaire (13, 14),
b) la zone marginale intérieure (15) de la partie annulaire (13) recouvre la zone marginale (16) de la partie centrale (12),
c) la zone marginale (16) de la partie centrale (12) est à distance, avec formation d'une fente annulaire (19), en-dessous de la zone marginale intérieure (15) de la partie annulaire (13),
d) des barrettes (21) sont prévues entre les zones marginales (15, 16) qui se recouvrent.
2. Préchauffeur de matières à charger suivant la revendication 1, caractérisé en ce que, pour des parties annulaires (13, 14) voisines, la zone marginale intérieure (17) de la partie annulaire extérieure (14) recouvre la zone marginale extérieure (18) de la partie annulaire intérieure (13) et se trouve, avec formation d'une fente annulaire (20), à distance audessus de la zone marginale extérieure (18) de la partie annulaire intérieure (13), et il est prévu des barrettes (22) entre les zones marginales (17, 18) qui se recouvrent.
3. Préchauffeur de matières à charger suivant la revendication 1 ou 2, caractérisé en ce que les barrettes (21, 22) sont dirigées radialement.
4. Préchauffeur de matières à charger suivant l'une des revendications 1 à 3, caractérisé en ce que les parties annulaires (13, 14) sont subdivisées respectivement en plusieurs tronçons annulaires.
5. Préchauffeur de matières à charger suivant l'une des revendications 1 à 4, caractérisé en ce que le bord extérieur (23) de la partie annulaire extérieure est raccordé de manière étanche à la paroi de la cuve, et il est prévu sur la partie annulaire extérieure (14) un épaulement (27) d'appui sur le bord d'une chambre (5).
6. Préchauffeur de matières à charger suivant l'une des revendications 1 à 5, caractérisé en ce que le bord extérieur (23) de la partie annulaire extérieure (14) est tourné vers le haut et il est prévu une garniture d'étanchéité (25) entre la zone marginale relevée et le côté extérieur (24) du récipient (3).

7. Préchauffeur de matières à charger suivant la revendication 5 ou 6, caractérisé en ce qu'il est prévu une garniture d'étanchéité (29) sur l'épaulement (27) d'appui sur le bord d'une chambre (5).

**Claims**

1. A charging material preheater in the form of a container for accommodating a charging material in particular metal scrap, which is to be heated up by means of a heating gas, including a bottom comprising at least two shell portions which can be pivoted away and which are each formed by elements whose edges overlap at a spacing forming a through-flow opening in the form of a slit for the heating gases, characterised by the following features in the closed condition of the bottom of the container:

a) the bottom (7) of the container is formed from a central portion (12) and at least one annular portion (13, 14),

b) the inward edge zone (15) of the annular portion (13) overlaps the edge zone (16) of the central portion (12),

c) the edge zone (16) of the central portion (12) is disposed at a spacing beneath the inward edge zone (15) of the annular portion (13), thereby forming an annular slit (19), and

d) web portions (21) are provided between the mutually overlapping edge zones (15/16).

2. A charging material preheater according to claim 1 characterised in that, in relation to adjacent annular portions (13, 14), the inward edge zone (17) of the outward annular portion (14) overlaps the outward edge zone (18) of the inward annular portion (13) and is disposed at a spacing above the outward edge zone (13) of the inward annular portion (13), thereby forming an annular slit (20), and web portions (22) are provided between the mutually overlapping edge zones (17/18).

3. A charging material preheater according to claim 1 or claim 2 characterised in that the web portions (21, 22) are directed radially.

4. A charging material preheater according to one of claims 1 to 3 characterised in that the annular portions (13, 14) are each subdivided into a plurality of annular parts.

5. A charging material preheater according to one of claims 1 to 4 characterised in that the outward edge (23) of the outermost annular portion joins sealingly to the wall of the container and provided on the outermost annular portion (14) is a shoulder (27) for resting on the edge of a chamber (5).

6. A charging material preheater according to one of claims 1 to 5 characterised in that the outward edge (23) of the outermost annular portion (14) is extended upwardly and a seal (25) is provided between the upwardly extended edge zone and the outside (24) of the container (3).

7. A charging material preheater according to claim 5 or claim 6 characterised in that a seal (29) is provided on the shoulder (27) for resting on the edge of a chamber (5).